# EUROPÄISCHE PATENTANMELDUNG

(11) **EP 2 254 222 A2**
(43) Veröffentlichungstag der Anmeldung: **24.11.2010**
(21) Anmeldenummer: 10005217.4
(22) Anmeldetag: 19.05.2010
(51) Int. Cl.: H02K 23/66, H02K 13/10

(54) **Elektrohandwerkzeuggerät mit einem einen Kommutator und Schleifbürsten aufweisenden Elektromotor**

(30) Priorität: 19.05.2009 DE 102009021926
(71) Anmelder: Metabowerke GmbH, 72622 Nürtingen (DE)
(72) Erfinder: Flöte, Enrico, 72636 Frickenhausen (DE)
(74) Vertreter: Raunecker, Klaus Peter

(57) **Zusammenfassung**

Die Erfindung betrifft ein Elektrohandwerkzeuggerät mit einem einen Kommutator (6) und Schleifbürsten (40, 42) aufweisenden Elektromotor; um auf eine verdrehbare Bürstenbrücke verzichten zu können wird erfindungsgemäß vorgeschlagen, dass Schleifbürsten (21; 40, 42) mit individuell kontaktierten und gegeneinander isolierten Teilen (14, 16, 18, 20) vorgesehen sind, wobei die Teile (14, 16, 18, 20) in Umdrehungsrichtung des Kommutators (6) aufeinander folgen, und dass die Teile (14, 16, 18, 20) je nach Drehrichtungsvorgabe am Elektrohandwerkzeuggerät schaltergesteuert mit Spannung beaufschlagt und damit aktiviert bzw. nicht spannungsverbunden und damit deaktiviert sind und dass durch die selektive Aktivierung der Teile (14, 16, 18, 20) in Abhängigkeit von der Drehrichtungsvorgabe eine optimale Anordnung der Schleifbürsten (40, 42) in der neutralen Zone (56) von Ankerquerfeld und Erregerfeld auch ohne verstellbare Bürstenbrücke realisiert ist.

## Beschreibung

Die Erfindung betrifft ein Elektrohandwerkzeuggerät mit einem einen Kommutatcr und Schleifbürsten aufweisenden Elektromotor.

Derartige Elektrohandwerkzeuggeräte sind umfangreich bekannt geworden. Im Betrieb des Elektromotors wird ein von Statorwicklungen des Elektromotors gebildetes Erregerfeld überlagert durch ein sogenanntes Ankerquerfeld, welches durch den in den Wicklungen des Ankers fließenden Strom erzeugt wird. Das Erregerfeld und das Ankerquerfeld überlagern sich zu einem Summenfeld mit der Wirkung, dass je nach Drehrichtung die sogenannte neutrale Zone um einige Grad in die eine oder andere Richtung verdreht wird. Man spricht hier von "Ankerrückwirkung". Im Stand der Technik war es bekannt, die Schleifbürsten auf einer entsprechend verdrehbaren Bürstenbrücke anzuordnen, so dass sie in Abhängigkeit von Linkslauf bzw. Rechtslauf des Ankers möglichst optimiert in der neutralen Zone des Summenfeldes (Erregerfeld plus Ankerquerfeld) angeordnet sind, damit übermäßiger Verschleiß an den Schleifbürsten, der durch sogenanntes Bürstenfeuer erzeugt wird, moglichst gering gehalten wird. Die Anordnung und Ausbildung einer verdrehbaren Bürstenbrücke ist jedoch technisch aufwändig.

Der vorliegenden Erfindung liegt die Aufgabe zugrunde, ein Elektrohandwerkzeuggerät der eingangs genannten Art zu schaffen, bei dem der vorstehend geschilderten Problematik in wirtschaftlicherer Weise Rechnung getragen wird.

Diese Aufgabe wird bei einem gattungsgemäßen Elektrohandwerkzeuggerät erfindungsgemäß dadurch gelöst, dass Schleifbürsten mit individuell kontaktierten und gegeneinander isolierten Teilen vorgesehen sind, wobei die Teile in Umdrehungsrichtung des Kommutators aufeinander folgen, und dass die Teile je nach Drehrichtungsvorgabe am Elektrohandwerkzeuggerät schaltergesteuert mit Spannung beaufschlagt und damit aktiviert bzw. nicht spannungsverbunden und damit deaktiviert sind und dass durch die selektive Aktivierung der Teile in Abhängigkeit von der Drehrichtungsvorgabe eine optimale Anordnung der Schleifbürsten in der neutralen Zone von Ankerquerfeld und Erregerfeld auch ohne verstellbare Bürstenbrücke realisiert ist.

Es wird also erfindungsgemäß vorgeschlagen, anstelle einer Bürstenbrücke mehrere individuell kontaktierte Teile der Schleifbürste vorzusehen, die ihrerseits bezüglich des Maschinengehäuses ortsfest vorgesehen sind und je nach Drehrichtung selektiv angesteuert werden. Dies erweist sich bei der konstruktiven Realisierung wirtschaftlicher, da auf den Verdrehmechanismus bekannter Bürstenbrücken verzichtet werden kann. Stattdessen brauchen nur die mehreren Teile der Schleifbürsten entsprechend der Drehrichtung angesteuert zu werden. Da die Teile der Schleifbürsten in Umdrehungsrichtung aufeinanderfolgend vorgesehen sind, können sie bezüglich der neutralen Zone des Summenfelds im Leerlauf des Motors so vorgesehen werden, dass ein Paar gegenüberliegender Schleifbürstenteile bezüglich dieser neutralen Zone im Uhrzeigersinn um einige wenige Grad verkippt angeordnet ist und das andere Paar in Gegenuhrzeigersinnrichtung zur neutralen Zone verkippt angeordnet ist. Auf diese Weise kann der drehrichtungsabhängigen Wirkung des Ankerquerfelds (Ankerrückwirkung) Rechnung getragen werden, so dass die gerade aktivierten Teile der Schleifbürsten optimal in der neutralen Zone von Ankerquerfeld und Erregerfeld angeordnet sind.

Nach einer Ausführungsform der Erfindung wäre es beispielsweise möglich, dass die in Umdrehungsrichtung des Kommutators aufeinander folgenden Teile einer Schleifbürste in aufeinanderfolgenden Bürstenhaltern angeordnet sind, wie wenn es sich um voneinander separate, jedoch individuell selektiv entsprechend der Drehrichtungsvorgabe ansteuerbare Schleifbürsten handeln würde. Nach einer weiteren Ausführungsform sind die in Umdrehungsrichtung des Kommutators aufeinander folgenden Teile einer Schleifbürste in demselben Bürstenhalter in radialer Richtung verschieblich geführt. Solchenfalls sind diese Teile, wie eingangs erwähnt, elektrisch voneinander isoliert, beispielsweise dadurch, dass zwischen ihnen eine elektrisch neutrale Trennschicht oder ein elektrisches Isoliermittel in an sich beliebiger Form angeordnet ist. Auch die Innenseiten desselben Bürstenhalters sind solchenfalls so auszubilden, dass eine elektrische Isolierung zwischen den Teilen der jeweiligen Schleifbürste gewährleistet ist.

In Weiterbildung des zuletzt genannten Erfindungsgedankens erweist es sich als vorteilhaft, wenn die in Umdrehungsrichtung des Kommutators aufeinander folgenden Teile einer Schleifbürste voneinander elektrisch isolierte und getrennt kontaktierte Schichten der Schleifbürste sind. Solchenfalls wind also eine gewissermaßen einstückige Schleifbürste (jeweils auf diametral gegenüberliegenden Seiten des Kommutators) verwendet, die zwei gegeneinander isolierte und getrennt kontaktierte und dadurch selektiv mit Spannung beaufschlagbare Schichten aufweist. Zur Isolierung kann solchenfalls eine verhältnismäßig dünne Schicht aus isolierendem Material, beispielsweise in Form einer Kunststofffolie, eingesetzt werden. Der Vorteil dieser Ausführungsform besteht darin, dass nur zwei Bürstenhalter auf diametral gegenäberliegenden Seiten des Kommutators vorgesehen werden müssen. Auf diese Weise lässt sich ohne weiteres ein Unterschied von ± 7,5° zu der neutralen Zone (betrachtet im Leerlauf des Motors) erzielen. (Bezüglich dieser beispielhaften Größe wurde eine Kommutatorlamelle berücksichtigt, die in Umfangsrichtung ein Winkelsegment von 15° umfasst.) Grundsätzlich wäre es denkbar, dass bei entsprechender Gestaltung und Dimensionierung der Schleifbürsten, und zwar als Schichtbürste oder mit voneinander körperlich in Umfangsrichtung beabstandeten Teilen einer Schleifbürste eine Anordnung der gerade aktivierten Schleifbürsten bzw. Schleifbürstenteile von bis zu ± 25°, insbesondere ± 22,5° bezüglich der neutralen Zone (betrachtet im Leerlauf des Motors) realisiert werden kann, so wie dies durch Verdrehen von im Stand der Technik bekannten Bürstenbrücken in die eine oder andere Richtung in Abhängigkeit von der Drehrichtungsvorgabe möglich ist.

In Weiterbildung der Erfindung erweist es sich als vorteilhaft, wenn ein manuell betätigbarer Drehrichtungsumschalter zugleich die selektive Aktivierung bzw. Deaktivierung der Teile der Schleifbürste bewirkt. Hier könnte ein mechanischer Schalter vorgesehen werden oder die Ansteuerung könnte durch elektronische Schalter verwirklicht sein.

Bei dem Elektromotor handelt es sich in vorteilhafter Weise um einen wechselspannungsbetriebenen Universalmotor (Reihenschlussmotor). Die Erfindung kann aber auch bei Gleichstrommotonen angewandt werden. Als besonders vorteilhaft erweist sich die Erfindung in Verbindung mit Elektrohandwerkzeuggeräten, deren Leistungsaufnahme des Elektromotors zwischen 500 und 1100 W, insbesondere zwischen 600 und 1000 W und weiter insbesondere zwischen 700 und 900 W liegt.

Weitere Merkmale, Einzelheiten und Vorteile der Erfindung ergeben sich aus den beigefügten Patentansprüchen und aus der zeichnerischen Darstellung und nachfolgenden Beschreibung der Erfindung. In der Zeichnung zeigt:
- Figur 1: eine schematische Ansicht (in axialer Richtung des Ankers bzw. des Kommutators gesehen) mit selektiv ansteuerbare Schleifbürstenteilen;
- Figur 2: eine Figur 1 entsprechende Darstellung mit geschichteten Schleifbürsten; und
- Figur 3: eine weitere schematische Darstellung der Schaltung der Schleifbürsten.

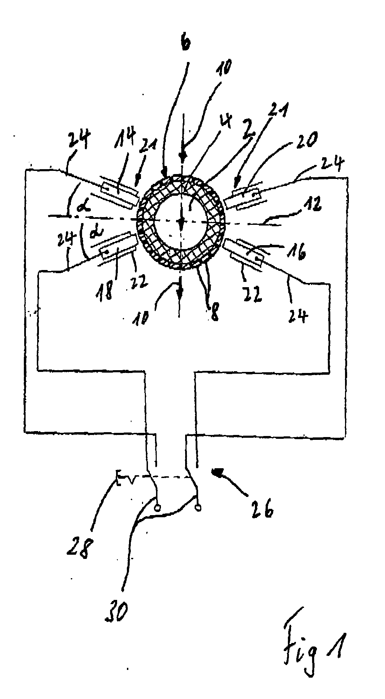

Figur 1 zeigt schematisch die erfindungsgemäße Anordnung von Schleifbürsten bzw. Teilen von Schleifbürsten bezüglich einem Kommutator eines Ankers eines erfindungsgemäßen, jedoch im Ganzen nicht dargestellten Elektrohandwerkzeuggeräts, beispielsweise eines Schraubers oder Bohrers. Man erkennt eine Ankerwelle 2 mit einer Kunststoffummantelung 4, auf die ein Kommutator 6 aufgepresst ist, der im beispielhaft dargestellten Fall 24 Lamellen umfasst, die jeweils ein Umfangswinkelsegment von knapp 15° überfangen. In Figur 1 oberhalb und unterhalb ist eine nicht dargestellte Erregerfeldwicklung eines maschinengehäusefesten Stators vorgesehen, derart, dass sich das Erregerfeld in Richtung der Pfeile 10 erstreckt. Die sogenannte neutrale Zone(betrachtet im Leerlauf des Motors) ist durch eine unterbrochene horizontale Linue 12 angedeutet.

Bei bekannten Elektrohandwerkzeuggeräten ist auf diametral gegenüberliegenden Seiten je eine Schleifbürste angeordnet, und zwar ungefähr in der neutralen Zone 12. Sie sind typischerweise auf einer verdrehbaren Bürstenbrücke angeordnet und können so bezüglich der neutralen Zone 12 um einige Grad in Uhrzeigersinnrichtung bzw. in Gegenuhrzeigersinnrichtung verdreht werden, um dem Ankerquerfeld, welches die neutrale Zone 12 verdrehe, Rechnung zu tragen.

Erfindungsgemäß ist vorliegend aber keine verdrehbare Bürstenbrücke vorgesehen, sondern es sind gemäß der Ausführungsform nach Figur 1 auf jeder Seite zwei voneinander elektrisch isolierte Teile 14, 16, 18, 20 der Schleifbürsten 21 vorgesehen, die in lediglich angedeuteten Bürstenhaltern 22 in radialer Richtung verschieblich gehalten sind. Die Teile 14, 16, 18, 20 sind über jeweils separate Bürstenlitzen 24 kontaktiert. Sie sind so angeordnet, dass sie bezüglich der neutralen Zone 12 des Stator-Erregerfelds um einige Grad in Uhrzeigersinnrichtung bzw. in Gegenuhrzeigersinnrichtung maschinengehäusefest positioniert sind. Bei Ansteuerung der Teile 14 und 16 über einen Schalter 26 sind die auf diese Weise aktivierten Teile 14, 16 bezüglich der neutralen Zone 12 des Erregerfelds um den Winkel α in Uhrzeigersinnrichtung verdreht. Entsprechend kann eine Verdrehung in Gegenuhrzeigersinnrichtung durch Ansteuerung bzw. Aktivierung der Bürstenteile 18 und 20 erreicht werden.

Bei dem angedeuteten Schalter 26 kann es sich in vorteilhafter Weise zugleich um den manuell betätigbaren Drehrichtungsumschalter des Elektrohandwerkzeuggeräts handeln (angedeutet durch Bezugszeichen 28). Mit Bezugszeichen 30 sind Anschlüsse zu den wicklungen des Erregerfelds (Stator) angedeutet.

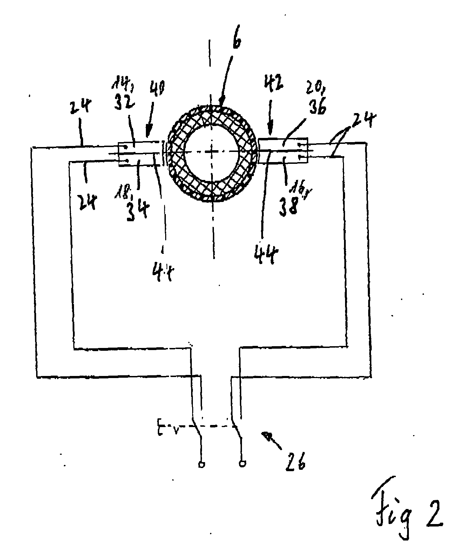

Figur 2 zeigt eine Figur 1 entsprechende Ansicht, wobei hier die Teile 14, 13, 20, 22 Schichten 32, 34, 36, 38 einer jeweils zweischichtigen Schleifbürste 40 bzw. 42 auf diametral gegenüberliegenden Seiten des Kommutators 6 sind. Die Schichten 32 und 34 bzw. 36 und 38 sind durch eine dünne Isolierschicht 44 voneinander getrennt. Die jeweilige Schleifbürste 40, 42 ist aber als einstückige Einheit mit zwei wegführenden Litzen 24 handhabbar. Jede zweischichtige Schleifbürste 4C, 42 ist in einem eigenen nicht dargestellten Bürstenhalter an sich üblicher Ausbildung in radialer Richtung verschieblich geführt. Diese Ausführungsform erweist sich als besonders wirtschaftlich, weil nur zwei Bürstenhalter vorgesehen werden müssen. In der einen Antriebsrichtung sind die Bürstenteile bzw. Bürstenschichten 34, 36 bestromt, d. h. aktiviert und in der anderen Drehrichtung die Bürstenteile oder Bürstenschichten 32, 38. Auch mit dieser vorteilhaften und bevorzugten Ausführungsform der Erfindung lässt sich entsprechend der Drehrichtungsvorgabe eine Verdrehung der Bürstenanordnung entsprechend der drehrichtungsabhängigen Lage der neutralen Zone des kombinierten Erregerfelds und Ankerfelds realisieren.

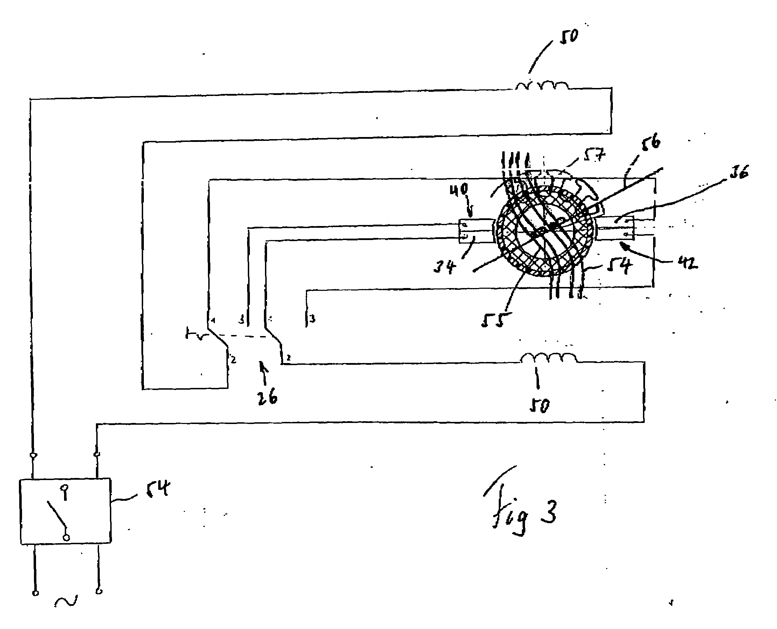

Figur 3 zeigt die vollständige Ansteuerung des Elektromotors, wobei nicht nur der Schalter 26, sondern auch der Anschluss zu den Feldspulen 50, 52 des Stators, welche das Erregerfeld erzeugen, dargestellt ist. Bezugszeichen 54 bezeichnet einen Netzschalter und gegebenenfalls vorgesehene Elektronik. Des Weiteren ist in Figur 3 das aus einer Überlagerung des Erregerfelds und des Querfelds der Ankerwicklungen gebildeten Summenfelds 55 (Bei Ankerrückwirkung) angedeutet, woraus sich die Lage der neutralen Zone 56 dieses Summenfeldes in der einen Drehrichtung ergibt. In diesem Fall würden die Schichten 34 und 36 der Schleifbürsten 40, 42 bestromt, um eine möglichst optimale Anordnung der Schleifbürsten in der neutralen Zone 56 zu erzielen. Angedeutet ist auch das Ankerblechpaket 57 hinter dem Kommutator 6.

Indem die Schlenfbürsten 40, 42 bzw. deren Schichten 32 bis 38 in Drehrichtung des Kommutators ausladender gestaltet werden, lässt sich der durch selektive Ansteuerung der Schichten erzielbare Verstellwinkel vergrößern.

## Patentansprüche

1. Elektrohandwerkzeuggerät mit einem einen Kommutator (6) und Schleifbürsten (21; 40, 42) aufweisenden Elektromotor, **dadurch gekennzeichnet, dass** Schleifbürsten (21; 40, 42) mit individuell kontaktierten und gegeneinander isolierten Teilen (14, 16, 18, 20) vorgesehen sind, wobei die Teile (14, 16, 18, 20) in Umdrehungsrichtung des Kommutators (6) aufeinander folgen, und dass die Teile (14, 16, 18, 20) je nach Drehrichtungsvorgabe am Elektrohandwerkzeuggerät schaltergesteuert mit Spannung beaufschlagt und damit aktiviert czw. nicht spannungsverbunden und damit deaktiviert sind und dass durch die selektive Aktivierung der Teile (14, 16, 18, 20) in Abhängigkeit von der Drehrichtuogsvorgabe eine optimale Anordnung der Schleifbürsten (21; 40, 42) in der neutralen Zone (56) von Ankerquerfeld und Erregerfeld auch ohne verstellbare Bürstenbrücke realisiert ist.

2. Elektrohandwerkzeuggerät nach Anspruch 1, **dadurch gekennzeichnet, dass** die in Umdrehungsrichtung des Kommutators (6) aufeinander folgenden Teile (14, 16, 18, 20) einer Schleifbürste (21; 40, 42) in aufeinander folgenden Bürstenhaltern (22) oder in demselben Bürstenhalter in radialer Richtung verschieblich geführt sind.

3. Elektrohandwerkzeuggerät nach Anspruch 1 oder 2, **dadurch gekennzeichnet, dass** die in Umdrehungsrichtung des Kommutators (6) aufeinander folgenden Teile (14, 16, 18, 20) einer Schleifbürste (40, 42) voneinander elektrisch isolierte und getrennt kontaktierte Schichten (32, 34, 36, 38) der Schleifbürste (40, 42) sind.

4. Elektrohandwerkzeuggerät nach Anspruch 1, 2 oder 3,
**dadurch gekennzeichnet, dass** die in Umdrehungsrichtung des Kommutators (6) aufeinander folgenden Teile (14, 16, 18, 20) einer Schleifbürste bezüglich der neutralen Zone (12) des Stator-Erregerfelds um bis zu ± 25°, insbesondere um bis zu ± 22,5° verdreht angeordnet sind.

5. Elektrohandwerkzeuggerät nach einem der vorstehenden Ansprüche, **dadurch gekennzeichnet, dass** ein manuell betätigbarer Drehrichtungsumschalter (28) zugleich die selektive Aktivierung bzw. Deaktivierung der Teile der Schleifbürste bewirkt.

6. Elektrohandwerkzeuggerät nach einem der vorstehenden Ansprüche, **dadurch gekennzeichnet, dass** der Elektromotor ein wechselspannungsbetriebener Universalmotor (Reihenschlussmotor) ist.

7. Elektrohandwerkzeuggerät nach einem der vorstehenden Ansprüche, **dadurch gekennzeichnet, dass** die Leistungsaufnahme des Elektromotors zwischen 500 und 1100 W, insbesondere zwischen 600 und 1000 W und weiter insbesondere zwischen 700 und 900 W liegt.
